# EUROPEAN PATENT APPLICATION

(11) **EP 2 065 829 A2**
(43) Date of publication of application: **03.06.2009**
(21) Application number: 08166978.0
(22) Date of filing: 17.10.2008
(51) Int. Cl.: G06F 21/02

(54) **Storage device, terminal device and method of using a storage device**

(30) Priority: 20.11.2007 KR 20070118782
(71) Applicant: Samsung Electronics Co., Ltd., Suwon-si, Gyeonggi-Do (KR)
(72) Inventor: Jin, Song-baik, Songpa-gu Seoul (KR)
(74) Representative: Walaski, Jan Filip

(57) **Abstract**

A method of using a storage device in a terminal device connected to the storage device includes reading an identification key stored in the storage device, if the storage device is connected, recovering, based on the identification key, one or more characteristic parameters regarding at least one of the storage device and a file stored in the storage device, and authenticating the storage device using the one or more recovered characteristic parameters. If the authentication is successful, the file is decrypted using the identification key and used. As a result, increased security is provided for the file stored in the storage device.

## Description

The present invention relates to a storage device, a terminal device using the storage device, and a method thereof. More particularly, the present invention relates to a storage device, a terminal device using the storage device, and a method thereof, to increase security of file data recorded in the storage device.

Recent developments in the field of electronics have made various types of image forming apparatuses such as printers, scanners, multi-function units (MFU), or facsimile machines, available for home use. Developers of image forming apparatuses have put more time and effort to provide upgraded software as well as hardware to meet the customer's increasing demands.

The developers of the image forming apparatus create various fonts so users can purchase and use the fonts in the image forming apparatuses. Most of the time, users download paid fonts from websites and install the fonts in PCs or image forming apparatuses. Therefore, the users cannot use the fonts if the current PCs or image forming apparatus storing the fonts cannot be used anymore. The problem is caused because the users buy the fonts but are only able to use the fonts specific to the system in which the fonts are initially installed.

Considering that various types of data storage devices, such as Universal Serial Bus (USB) sticks, or memory cards are available, it would be desirable to provide the font files installed in a storage medium. However, illegal copying or piracy has to be dealt with appropriately to use such storage devices.

Furthermore, the above problems of the storage device are not limited to the image forming apparatuses using font files only, when considering that an increasing number of storage devices are used to provide data in many fields, such as a USB stick storing digital certificates for Internet banking, or other types of storage devices storing paid for data such as MP3 files or video files. Therefore, it is important that such storage devices are protected. Accordingly, a method is required, which is to protect the files stored in the storage devices efficiently.

The present invention provides a storage device to protect a stored file efficiently, a terminal device using the storage device, and a method to use the storage device.

Additional aspects and utilities of the present invention will be set forth in part in the description which follows and, in part, will be obvious from the description, or may be learned by practice of the invention.

The foregoing and other aspects and utilities of the present invention may be achieved by providing a method of using a storage device. The method includes generating an identification key, using one or more characteristic parameters of at least one of the storage device and a file to be stored in the storage device such that the storage device is connectable to a terminal device, encrypting the file using the generated identification key, and storing the encrypted file and the identification key in the storage device.

The encrypted file and the identification key may be separately stored in at least one of a general data area and a reserved area of the storage device.

The terminal device may include an image forming apparatus or a host device, and the file includes a font file to be used in the image forming apparatus.

The foregoing and other aspects and utilities of the present invention may be achieved by providing a method of using a storage device, which includes reading an identification key stored in the storage device, if the storage device is connected, recovering, based on the identification key, one or more characteristic parameters of at least one of the storage device and a file stored in the storage device, and authenticating the storage device using the one or more recovered characteristic parameters.

The authenticating the storage device may include detecting the one or more characteristic parameters from the storage device, comparing the one or more detected characteristic parameters and the recovered characteristic parameters, authenticating the storage device if the one or more detected and recovered characteristic parameters match, and un-authenticating the storage device if the one or more detected and recovered characteristic parameters do not match.

The authenticating the storage device may include un-authenticating the storage device, if the storage device does not store the identification key, or if the one or more characteristic parameters are not recovered from the identification key.

The method may further include decrypting a file stored in the storage device using the identification key, if the storage device is authenticated.

The checking the identification key may include checking a recognition text string from a predetermined area of the storage device, and if the recognition text string is checked, determining data including the checked recognition text string to be the identification key.

The file may include a font file used in an image forming apparatus.

The foregoing and other aspects and utilities of the present invention may be achieved by providing a terminal device which includes an identification key generating unit to generate an identification key, using one or more characteristic parameters of at least one of the storage device and a file to be stored in a storage device, an encryption unit to encrypt the file using the generated identification key, and a control unit to store the encrypted file and the identification key in the storage device.

The device may further include an interface unit connectable to the storage device, or an external terminal device connected to the storage device.

The control unit may separately store the encrypted file and the identification key in at least one of a general data area and a reserved area of the storage device.

The file may include a font file to be used in the image forming apparatus.

The foregoing and other aspects and utilities of the present invention may be achieved by providing a terminal device which includes a storage device interface unit connectable to a storage device, a control unit to check an identification key stored in the storage device, to recover, based on the identification key, one or more characteristic parameters of at least one of the storage device and a file stored in the storage device, and to authenticate the storage device using the one or more recovered characteristic parameters, and a decryption unit to decrypt the file using the checked identification key, if the authentication is successful.

The control unit may compare the one or more detected characteristic parameters and the recovered characteristic parameters, and authenticate the storage device if the one or more detected and recovered characteristic parameters match, and unauthenticate the storage device, if the one or more detected and recovered characteristic parameters do not match, if the storage device does not store the identification key, or if the one or more characteristic parameters are not recovered from the identification key.

The control unit may search a recognition text string from a predetermined area of the storage device, and determines data including the searched recognition text string to be the identification key.

The file may include a font file to be used in an image forming apparatus.

The foregoing and other aspects and utilities of the present invention may be achieved by providing a storage device connectable to a terminal device, which includes a general data area to store a font file, and a reserved area to store an identification key which is generated by combining one or more characteristic parameters of at least one of the font file and the storage device, and which is used for encryption and decryption of the font file to be stored in the general data area.

These and/or other aspects and utilities of the present invention will become apparent and more readily appreciated from the following description of the embodiments, taken in conjunction with the accompanying drawings, in which:
FIGS. 1 to 3 are block diagrams illustrating a terminal device to store files in a storage device according to an example embodiment of the present invention;
FIG. 4 is a block diagram illustrating a terminal device using a file stored in a storage device according to an example embodiment of the present invention;
FIG. 5 is a block diagram illustrating a storage device according to an example embodiment of the present invention;
FIG. 6 is a flowchart illustrating a method to use a storage device to store a file, according to an example embodiment of the present invention;
FIG. 7 is a flowchart illustrating a method to use a storage device to playback a file, according to an example embodiment of the present invention; and
FIG. 8 is a flowchart illustrating in detail the method of FIG. 7.

Reference will now be made in detail to embodiments of the present invention, examples of which are illustrated in the accompanying drawings, wherein like reference numerals refer to the like elements throughout. The embodiments are described below in order to explain the present invention by referring to the figures.

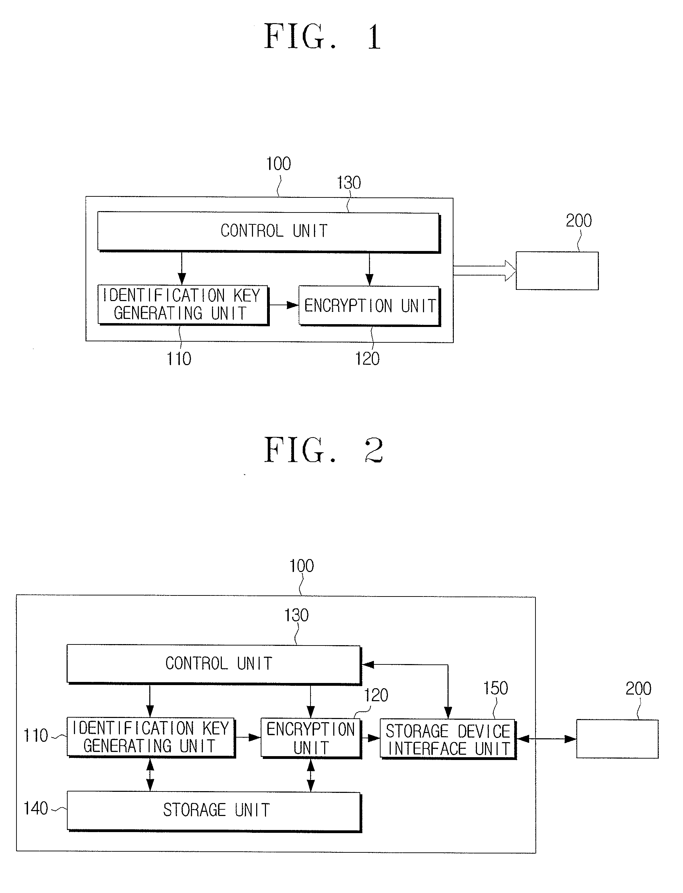

FIG. 1 is a block diagram illustrating a terminal device according to an example embodiment of the present invention.

Referring to FIG. 1, the terminal device 100 includes an identification key generating unit 110, an encryption unit 120, and a control unit 130. The terminal device 100 may be implemented as a personal computer (PC), an image forming apparatus, a laptop, a mobile phone apparatus or other compact-sized portable terminals.

The identification key generating unit 110 generates an identification key to encrypt a file to be stored in a storage device 200. The identification key generating unit 110 may generate an identification key by combining a characteristic parameter of the storage device 200 with a characteristic parameter of a file to be stored in the storage device 200. The storage device 200 may be implemented as a USB memory stick, or a memory card.

The characteristic parameter of the storage device 200 may include a serial number, a manufacturer ID, a product name, or a mark character of the storage device 200 to define the storage device 200. However, the present invention is not limited thereto. It is possible that a characteristic representing the storage device can be used as the characteristic parameter.

The characteristic parameter of the file may include a date or time when the file is generated. The characteristic parameter of the file is variable, and is updated to the new date or time when the file is copied or reprinted. A size of the file may be utilized as the characteristic parameter.

The identification key generating unit 110 may generate an identification key by combining the characteristic parameters in various manners. For example, if the storage device 200 has a serial number SN023945, recognition text string of SAMSUNG, and time and date of file generation that correspond to 11:05:15, April 13, 1977, the identification key generating unit 110 may generate an identification key of SN02394519770413110515SAMSUNG. Different characteristic parameters may be combined, in a different order or manner. An additional random numeric sequence may also be included in the identification key.

The encryption unit 120 encrypts a file to be stored in the storage device 200, using an identification key generated by the identification key generating unit 110. The encryption unit 120 may selectively use known encryption algorithms. For example, the encryption unit 120 may use the Blowfish algorithm provided by the Java Cryptography Extension (JCE), Digital Encryption Standard (DES), Triple DES Encryption (DESede), or Password-based encryption algorithm (PBEWithMD5AndDES).

The control unit 130 causes an encrypted file and an identification key to be stored in the storage device 200, when the file is encrypted by the encryption unit 120. If the storage device 200 is directly connected to a terminal device, the control unit 130 directly accesses the storage device 200 to store the file. If the storage device 200 is connected to an external terminal device, the control unit 130 causes a file to be stored in the storage device 200 via the external terminal device to which the storage device 200 is connected.

FIG. 2 is a block diagram illustrating a terminal device 100 which is directly connectible to the storage device 200 according to an embodiment of the present invention.

Referring to FIG. 2, the terminal device 100 includes the identification key generating unit 110, the encryption unit 120, and the control unit 130, and further includes a storage unit 140 to store a file to be stored in the storage device 200, and a storage device interface unit 150 directly connectable to the storage device 200.

A user may activate an application program installed in the terminal device 100 to input a command to direct recording of a file in the storage device 200 in the piracy-protect state.

If the command is input while the storage device 200 is connected to the storage device interface 150, the control unit 130 detects characteristic parameters stored in the storage device 200 and provides the identification key generating unit 110 with the detected parameters. The identification key generating unit 110 generates an identification key, using the characteristic parameters of the storage device and the characteristic parameter of the file selected by the user, so that the file can be stored in the storage device 200. The process of generating an identification key will not be explained in detail below, since this has been explained above.

The encryption unit 120 detects a file stored in the storage unit 140, and encrypts the file using the generated identification key. The control unit 130 directly stores the file encrypted by the encryption unit 120 and the identification key generated by the identification key generating unit 110 to the storage device 200. More specifically, the file is stored in a general data area provided inside the storage device 200, while the identification key is stored in a reserved area also provided inside the storage device 200. The general data area is the memory area that permits writing, reading, and copying of the data, while the reserved area is empty space that includes no data and that generally permits no copying.

Since the file is encrypted using an identification key reflecting the variable characteristic parameters of the file, the storage device 200 can provide heightened security.

The control unit 130 may also encrypt an identification key and store the identification key in the storage device 200. The control unit 130 may use one of the above-mentioned encryption algorithms to encrypt the identification key.

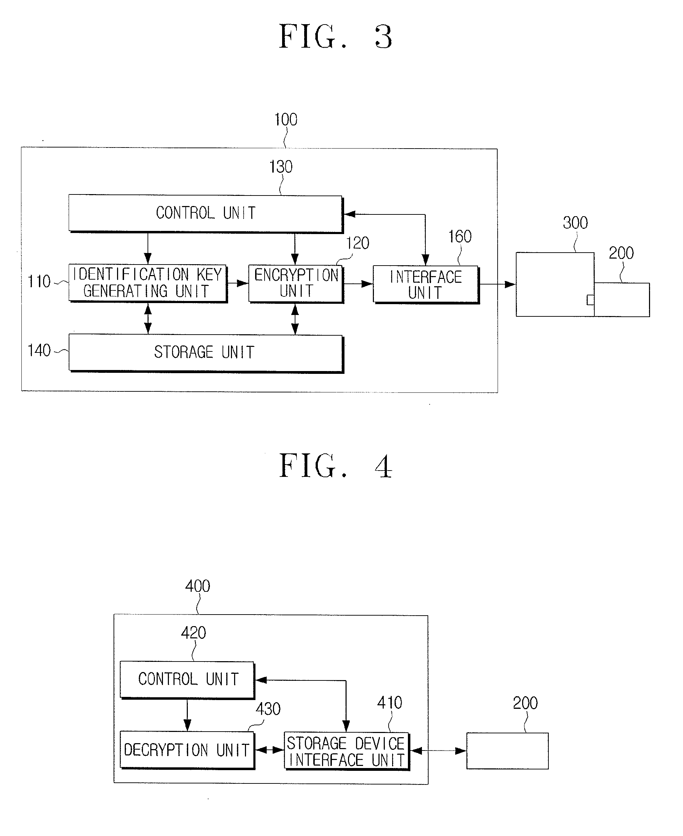

FIG. 3 is a block diagram illustrating a terminal device which is not directly connected to the storage device 200 according to an embodiment of the present invention.

Referring to FIG. 3, the terminal device 100 includes an interface unit 160, instead of the storage device interface unit 150.

The interface unit 160 is connected via a communication network to an external terminal device 300 to which the storage device 200 is connected. The external terminal device 300 may be implemented as an image forming apparatus, the terminal device 100 may be implemented as a PC, a laptop, or a portable terminal device, and the storage device 200 may be implemented as a USB memory stick or memory card to be directly connected to the image forming apparatus. While the storage device interface unit 150 of FIG. 2 and the interface unit 160 of FIG. 3 are explained with different reference numerals and names, since these two elements correspond in function to each other, one will understand that the storage device interface unit 150 and the interface unit 160 may be collectively referred to as an interface.

The control unit 130 checks the characteristic parameters of the storage device 200 through the external terminal device 300 connected via the interface unit 160, performs file encryption in the manner explained above, and stores the encrypted file and the identification key to the storage device 200. These operations of the control unit 130 will not be explained in detail below, since these are already explained above with reference to FIGS. 1 and 2.

In one example implementation, a font file may be stored in the storage device 200. Accordingly, a storage device 200 to store a font file may be fabricated using the terminal device 100 of FIGS. 1 to 3.

FIG. 4 is a block diagram illustrating a terminal device to use a file stored in a storage device according to an embodiment of the present invention.

Referring to FIG. 4, the terminal device 400 may include a storage device interface unit 410, a control unit 420, and a decryption unit 430.

The storage device interface unit 410 is directly connectable to the storage device 200. If the storage device 200 is connected to the storage device interface unit 410, the control unit 420 accesses the storage device 200 and checks the identification key. The control unit 420 may check the identification key using a recognition text string. Specifically, the control unit 420 searches to determine whether a recognition text string exists in an area provided in the storage device 200. If a recognition text string is detected, the control unit 420 perceives a stream including the recognition text string as the identification key.

Upon checking the identification key, the control unit 420 recovers characteristic parameters based on the identification key. For example, if the identification key is 'SN02394519770413110515SAMSUNG,' the control unit 420 recovers the serial number of the storage device 200, date of generating a file, time, and recognition text string in corresponding order. If the identification key is encrypted in the process of being stored in the storage device 200, the control unit 420 decrypts the identification key to use.

The control unit 420 performs authentication using the recovered characteristic parameters, to determine whether the storage device 200 is an authorized device, or illegally copied or pirated device. Specifically, the control unit 420 directly detects various characteristic parameters recorded in the storage device 200, and compares the detected characteristic parameters with the recovered characteristic parameters. The control unit 420 determines that an authentication of the storage device 200 is successful if the characteristic parameters match, and that an authentication fails if the characteristic parameters do not match.

If the storage device 200 is the one that is not distributed by the original manufacturer, when a file is extracted from this storage device 200 and stored to another storage device, there is a discrepancy between the identification keys, since the new storage device does not have a corresponding certificate or the newly stored file has a new file generation date. The new storage device also has a different serial number from the old storage device 200. Accordingly, a determination is made as to whether the copying is illicit by comparing the characteristic parameters included in the identification key.

Meanwhile, even the area that stores the unique characteristic parameters such as the serial number may be forcefully reprinted, or the file many be copied onto another storage device having the same recognition text string.

For example, if the storage device 200 uses only the recognition text string 'SAMSUNG' as the characteristic parameter, a file can be copied onto another storage device that has the same recognition text string, 'SAMSUNG.' Even in this case, determining that the file is copied inappropriately is possible, based on the time and date when the file is stored to a new storage device. If a file is copied 10:10:10, October 10, 2000, such time and date information is appended to a corresponding file. The control unit 420 perceives from the identification key that the time and date of recovering the file, that is, 11:05:15, April 13, 1977, is different from 10:10:10, October 10, 2000 which is the time and date when the file is detected from the storage device 200. Accordingly, the control unit 420 determines that the authentication fails, and that the file is copied illicitly.

The control unit 420 may also determine that the authentication fails, if the storage device 200 does not have an identification key, or the characteristic parameter is not recovered from the identification key.

The decryption unit 430 decrypts a file using the identification key, if the authentication of the storage device 200 is successful. The decryption unit 430 may reverse the encryption operations which are performed to record the file in the storage device 200. Meanwhile, if a font file is stored in the storage device 200, and if an image forming apparatus is implemented as the terminal device 400, the control unit 420 may apply the fonts of the decrypted font file in forming an image.

If the authentication fails, the control unit 420 outputs a message to notify the user that the storage device 200 can not be used, through a separate output device such as display (not illustrated), or a speaker (not illustrated).

FIG. 4 illustrates a terminal device to use the storage device storing a file which is recorded by the terminal devices of FIGS. 1 to 3. A storage device interface unit 410 of FIG. 4 may correspond to the storage device interface unit 150 of FIG. 2, and the control unit 420 of FIG. 4 may correspond to the control units 130 of FIGS. 1 to 3. The decryption unit 430 of FIG. 4 may be implemented as a separate module from the encryptions unit 210 of FIGS. 1 to 3, or an integrated module that includes both the encryption and decryption functions may be implemented.

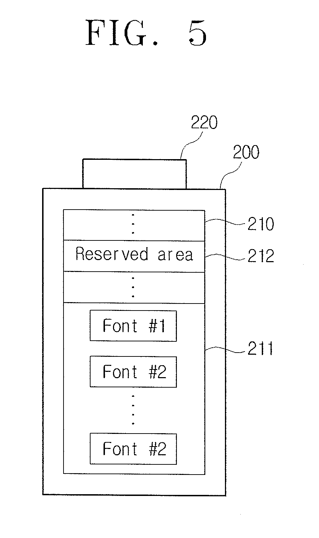

FIG. 5 illustrates the structure of a storage device according to an example embodiment of the present invention.

Referring to FIG. 5, the storage device 200 includes a memory area 210, and a connecting unit 220 connected to a terminal device.

The memory area 210 includes a general data area 211 to store general files, and a reserved area 212. The general data area 211 may store various font files (font file #1 to #n).

The memory area 210 may also include a master boot record (MBR) area to store information about partitions, a partition boot record (PBR) area to store information about the partitions, or a file allocation table (FAT).

The reserved area 212 may store an identification key. As explained above, an identification key may be generated by combining at least one of the characteristic parameters of the storage device 200 and the characteristic parameters of a file to be stored in the storage device 200.

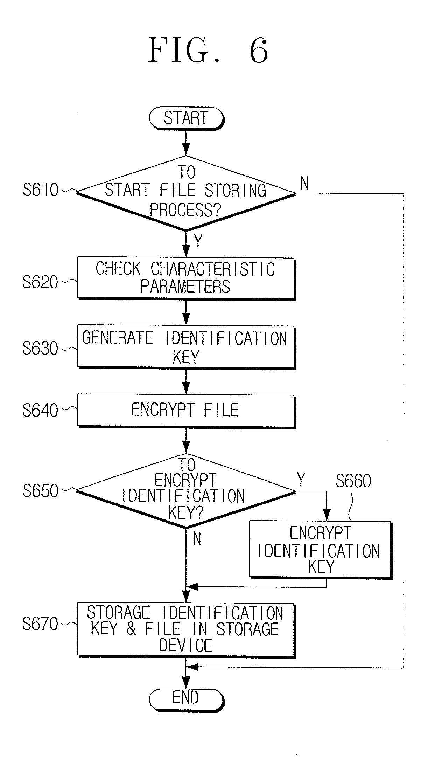

FIG. 6 is a flowchart illustrating a method of using a storage device storing a file therein according to an example embodiment of the present invention.

The method of using the storage device illustrated in FIG. 6 may be applied to the terminal device of FIG. 2 to which the storage device is directly connected, or to the terminal device of FIG. 3 to which the storage device is indirectly connected.

The user may connect the storage device to the image forming apparatus, executes an application on a host PC which is connected by a local or network communication to the image forming apparatus, and inputs a command to the storage device to store a font file.

In operation S610, the file storing process is started, and in operation S620, characteristic parameters are determined. To have the file storing process started, the user executes a devoted application employed to store a file in the storage device, selects the file such as a font file to store in the storage device, and gives a command to start copying.

The characteristic parameters may include characteristic parameters regarding the storage device, or characteristic parameters regarding a file to be stored in the storage device.

In operation S630, an identification key is generated using the checked characteristic parameters. An identification key may be generated by sequentially arranging the checked characteristic parameters, or by interleaving the checked characteristic parameters according to a predetermined rule, and arranging the parameters.

In operation S640, a file is encrypted using the generated identification key. The encryption may use a known encryption algorithm.

In operations S650 and S660, an identification key may be encrypted and then a separate encryption may be processed.

In operation S670, the encrypted file and the identification key are stored to the storage device. The encrypted file may be stored in the general file area of the storage device, and the identification key may be stored in a separate area such as a reserved area provided in the storage device.

If the terminal device is connected to the storage device in the manner illustrated in FIG. 3, one of the terminal device and the image forming apparatus may process the above identification key generating operation and the encryption operation.

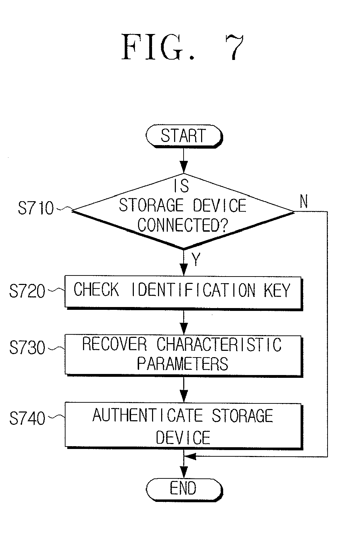

FIG. 7 is a flowchart to illustrate a method to use a storage device, that is, using a file stored in the storage device according to an example embodiment of the present invention.

In operation S710, if a storage device is connected, in operation S720, an identification key stored in the storage device is checked.

In operation S730, characteristic parameters are recovered from the checked identification key. The characteristic parameters represent the characteristics of the storage device, or a characteristic of the file stored in the storage device.

In operation S740, authentication is processed using the recovered characteristic parameters, to determine whether or not the storage device is an authorized device.

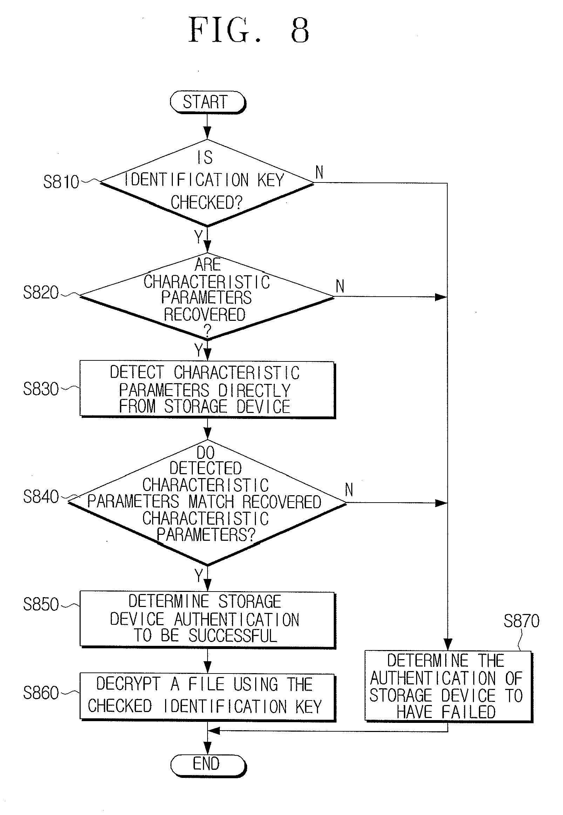

FIG. 8 is a flowchart illustrating in detail the method of using the storage device of FIG. 7.

In operation S810, as the storage device is connected, a determination is made whether an identification key of the storage device can be checked. If the storage device has an illicit copy, an identification key may not exist, since the identification key stored in the reserved area can not be copied. In operation S870, if the identification key does not exist, the authentication of the corresponding storage device is determined to have failed.

Meanwhile, if a user has forcefully copied even the reserved area and the identification key stored therein, the identification key may be checked. Therefore, in operation S820, characteristic parameters are recovered from the checked identification key. In operation S870, the authentication of the corresponding storage device is determined to have failed, if the characteristic parameters are not recovered.

In operation S830, if the characteristic parameters are recovered, characteristic parameters are separately and directly detected from the storage device. The location of storing the characteristic parameters may be determined from the MBR or the storage device.

In operation S840, a determination is made whether the detected characteristic parameters match the recovered characteristic parameters. In operation S850, if the detected and recovered characteristic parameters match, a determination is made that the authentication of the storage device is successful.

In operation S860, if the authentication is successful, a file is decrypted using the checked identification key, so that an intended job such as a printing can be performed using the decrypted file data.

In operation S870, if the detected and recovered characteristic parameters do not match, a determination is made that the authentication of the storage device fails.

The present invention can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Although not illustrated in detail in FIG. 8, if the storage device stores an encrypted identification key, the identification key may desirably be decrypted first, before the characteristic parameters are recovered from the identification key.

The method of using the storage device explained above may further include the additional operations of outputting a message and informing that the file stored in the storage device is an illicit copy, or rejecting a request for access to the file of the storage device, if the authentication of the storage device fails.

According to the example embodiments of the present invention explained above, since a file is encrypted or decrypted using at lest one of characteristic parameters regarding a storage device and a file, illegal copying or use of a file stored in the storage device is effectively prevented. As a result, file security is increased.

Although various embodiments of the present invention have been illustrated and described, it will be appreciated by those skilled in the art that changes may be made in these embodiments without departing from the principles of the invention, the scope of which is defined in the appended claims.

## Claims

1. A method of using a storage device, the method comprising:
generating an identification key, using one or more characteristic parameters of at least one of the storage device and a file to be stored in the storage device;
encrypting the file using the generated identification key; and
storing the encrypted file and the identification key in the storage device.

2. The method of claim 1, wherein the storage device is connectable to a terminal device, and the terminal device comprises an image forming apparatus or a host device, wherein the file may comprise a font file to be used in the image forming apparatus.

3. The method of claim 1 or 2, further comprising:
reading an identification key stored in the storage device, if the storage device is connected;
recovering, based on the identification key, one or more characteristic parameters of at least one of the storage device and a file stored in the storage device; and
authenticating the storage device using the one or more recovered characteristic parameters.

4. The method of claim 3, wherein authenticating the storage device comprises:
detecting the one or more characteristic parameters from the storage device;
comparing the one or more detected characteristic parameters and the recovered characteristic parameters;
authenticating the storage device if the one or more detected and recovered characteristic parameters match; and
not authenticating the storage device if the one or more detected and recovered characteristic parameters do not match.

5. The method of claim 3, wherein authenticating the storage device comprises:
not authenticating the storage device, if the storage device does not store the identification key, or if the one or more characteristic parameters are not recovered from the identification key.

6. The method of claim 3, 4 or 5, further comprising:
decrypting a file stored in the storage device using the identification key, if the storage device is authenticated.

7. The method of any one of claims 3 to 6, wherein checking the identification key comprises:
checking a recognition text string from a predetermined area of the storage device; and
if the recognition text string is checked, determining data including the checked recognition text string to be the identification key.

8. The method of any one of the preceding claims, wherein the encrypted file and the identification key are separately stored in at least one of a general data area and a reserved area of the storage device.

9. A terminal device, comprising:
an identification key generating unit for generating an identification key, using one or more characteristic parameters of at least one of a storage device and a file to be stored in the storage device;
an encryption unit for encrypting the file using the generated identification key; and
a control unit for storing the encrypted file and the identification key in the storage device.

10. The device of claim 9, wherein the control unit is arranged to separately store the encrypted file and the identification key in at least one of a general data area and a reserved area of the storage device.

11. The device of claim 9 or 10, further, comprising:
a storage device interface unit connectable to a storage device;
a control unit for checking an identification key stored in the storage device, and for recovering, based on the identification key, one or more characteristic parameters of at least one of the storage device and a file stored in the storage device, and for authenticating the storage device using the one or more recovered characteristic parameters; and
a decryption unit for decrypting the file using the checked identification key, if the authentication is successful.

12. The device of claim 11, wherein the control unit is arranged to compare the one or more detected characteristic parameters and the recovered characteristic parameters, and to authenticate the storage device if the detected and recovered characteristic parameters match, and not to authenticate the storage device, if the one or more detected and recovered characteristic parameters do not match, if the storage device does not store the identification key, or if the one or more characteristic parameters are not recovered from the identification key.

13. The device of claim 11 or 12, wherein the control unit is arranged to search a recognition text string from a predetermined area of the storage device, and to determine data including the searched recognition text string to be the identification key.

14. The device of any one of claims 9 to 13, wherein the file comprises:
a font file to be used in an image forming apparatus.

15. A storage device connectable to a terminal device, the storage device comprising:
a general data area to store a font file; and
a reserved area to store an identification key which is generated by combining one or more characteristic parameters of at least one of the font file and the storage device, and which is used for encryption and decryption of the font file to be stored in the general data area.
